(19) Europäisches Patentamt / European Patent Office / Office européen des brevets

(11) **EP 2 424 234 A1**

(12) **EUROPEAN PATENT APPLICATION**
published in accordance with Art. 153(4) EPC

(43) Date of publication:
**29.02.2012 Bulletin 2012/09**

(51) Int Cl.:
*H04N 5/64* (2006.01)  *H01J 17/49* (2012.01)
*G02F 1/1333* (2006.01)  *G09G 3/20* (2006.01)

(21) Application number: **09844091.0**

(22) Date of filing: **22.09.2009**

(86) International application number:
**PCT/KR2009/005380**

(87) International publication number:
**WO 2010/126209 (04.11.2010 Gazette 2010/44)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **27.04.2009 KR 20090036333**
**30.04.2009 KR 20090037935**
**08.05.2009 KR 20090040198**

(71) Applicant: **LG Electronics Inc.**
**Seoul 150-721 (KR)**

(72) Inventors:
• **KIM, Hyo-Jun**
**Pyeongtaek-si**
**Gyeonggi-do 451-713 (KR)**
• **OH, Dae-Sung**
**Pyeongtaek-si**
**Gyeonggi-do 451-713 (KR)**
• **OH, Sang-Min**
**Pyeongtaek-si**
**Gyeonggi-do 451-713 (KR)**
• **KIM, Jin-Hwan**
**Pyeongtaek-si**
**Gyeonggi-do 451-713 (KR)**

(74) Representative: **Cabinet Plasseraud**
**52, rue de la Victoire**
**75440 Paris Cedex 09 (FR)**

(54) **DISPLAY APPARATUS**

(57)    The present invention relates to a display apparatus, which comprises: a display panel; a front filter which is arranged on the front side of a display module, wherein the display panel and the front filter are spaced from each other at an interval of 3 mm or less.

[Fig. 5]

**Description**

## TECHNICAL FIELD

The present disclosure relates to a display apparatus.

## BACKGROUND ART

Generally, electronic apparatuses such as mobile communication terminals, digital cameras, laptop computers, monitors, and TVs are equipped with display apparatuses for displaying images.

Demands on display apparatuses are being increased in various forms with advance of information-oriented society. Various display apparatuses such as liquid crystal displays (LCDs), plasma display panels (PDPs), electro luminescent displays (ELDs), and vacuum fluorescent displays (VFDs) are being used and studied.

## DISCLOSURE OF THE INVENTION

## TECHNICAL PROBLEM

Embodiments provide a display apparatus capable of displaying images having improved quality.

## TECHNICAL SOLUTION

In one embodiment, a display apparatus includes: a display panel; and a front filter disposed at a front side of the display module, wherein the display panel and the front filter are spaced apart from each other by 3 mm or less.

In another embodiment, a display apparatus includes: a display module including a display panel, a driver integrated circuit (IC) configured to supply a driving signal to the display panel, and a heat sink configured to dissipate heat from the driver IC; and a front filter at a front side of the display module, wherein a distance between the display panel and the front filter is 3 mm or smaller, and the a front end part of the heat sink close to a rear side of the front filter is bent in a direction parallel with the front filter.

In another embodiment, a display apparatus includes: a display panel; a front filter at a front side of the display panel; a main frame coupled to a rear side of the display panel; and first and second horizontal frames extending horizontally at upper and lower positions of the main frame, wherein a distance between the display panel and the front filter is 3 mm or smaller, and a distance between the first horizontal frame and an upper end of the main frame is smaller than a distance between the second horizontal frame and a lower end of the main frame.

## ADVANTAGEOUS EFFECTS

According to the embodiments, the distance between the display module and the front filter is reduced to prevent the image doubling phenomenon of a display image and irregular reflection and thus to improve image quality. In addition, the thickness of the display apparatus can be reduced for good appearance.

In addition, the positions and sizes of the horizontal frames can be adjusted to improve the rigidity of the display module, and the front end part of the heat sink for the driver IC can be bent at a position close to the front filter so as to increase the rigidity of the display module and heat dissipating effects.

## BRIEF DESCRIPTION OF THE DRAWINGS

Fig. 1 is a partial sectional view illustrating a display apparatus according to an embodiment.
Fig. 2 is a sectional view for explaining image doubling of the display apparatus.
Fig. 3 is a graph showing experimental results.
Fig. 4 is a perspective view illustrating a display apparatus according to another embodiment.
Fig. 5 is a partial sectional view illustrating the display apparatus of Fig. 4, according to a first embodiment.
Fig. 6 is a partial sectional view illustrating the display apparatus of Fig. 4, according to a second embodiment.
Fig. 7 is a rear view illustrating a display module according to an embodiment.
Fig. 8 is a sectional view illustrating a lower part of the display apparatus of Fig. 4, according to an embodiment.
Figs. 9 and 10 are enlarged sectional views illustrating a portion indicated by a dot-and-chain line in Fig. 8, according to embodiments.

Fig. 11 is a perspective view illustrating a heat sink according to an embodiment.

Fig. 12 is a perspective view illustrating horizontal and vertical frames disposed at the rear side of a display module according to an embodiment.

Fig. 13 is a view illustrating packing members for a display apparatus according to an embodiment.

Fig. 14 is a sectional view illustrating a position of a horizontal frame according to an embodiment.

Fig. 15 is a view illustrating a size of a horizontal frame according to an embodiment.

Figs. 16 and 17 are schematic sectional views illustrating front filter structures including an electromagnetic interference (EMI) shield layer according to embodiments.

Fig. 18 is a view illustrating Newton's rings on a display apparatus.

Figs. 19 to 22 are schematic sectional views illustrating display apparatus structures including anti glare layers according to embodiments.

Fig. 23 is a sectional view illustrating a display apparatus according to another embodiment.

## MODE FOR CARRYING OUT THE INVENTION

Reference will now be made in detail to the embodiments of the present disclosure, examples of which are illustrated in the accompanying drawings. The spirit and scope of the present disclosure, however, shall not be construed as being limited to embodiments provided herein. Rather, it will be apparent that other embodiments that fall within the spirit and scope of the present disclosure may easily be derived through adding, modifying, and deleting elements herein.

The meaning of 'comprises' and/or 'comprising' specifies a property, a region, a fixed number, a step, a process, an element and/or a component but does not exclude other properties, regions, fixed numbers, steps, processes, elements and/or components.

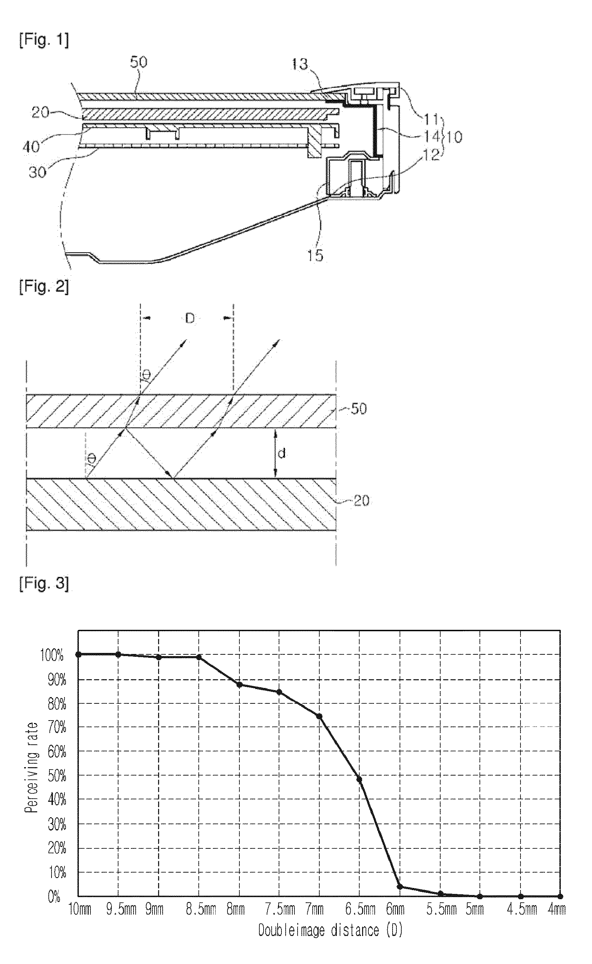

Fig. 1 is a partial sectional view illustrating a display apparatus according to an embodiment.

Referring to Fig. 1, a display panel 20 may include a front plate and a rear plate that are vertically coupled. The display panel 20 may be one of various display panels such as liquid crystal displays (LCDs), plasma display panels (PDPs), electro luminescent displays (ELDs), vacuum fluorescent display (vacuum fluorescent displays). A case 10 encloses the rear side of the display panel 20. The case 10 may include a cabinet 11 and a back cover 12.

The display apparatus of the current embodiment may include a printed circuit board 30 configured to control operations of the display panel 20, a heat dissipation plate 40 configured to dissipate heat from the display panel 20 and the printed circuit board 30, and a front filter 50 disposed at the front side of the display panel 20.

When images are displayed on the display panel 20, light emitted from the display panel 20 passes through the front filter 50. For example, the front filter 50 may be formed of a transparent glass material. In addition, the front filter 50 may be formed of a strengthened glass material for satisfying strength requirements of a large display apparatus. However, materials that can be used to form the front filter 50 are not limited thereto. For example, the front filter 50 may be formed of a transparent plastic material. That is, the front filter 50 may be formed of any material that is transparent and has a desired strength.

In addition, the front filter 50 may include a plurality of functional layers such as a non-reflection layer, an optical characteristic layer, an electromagnetic interference (EMI) shield layer, and a near infrared (NIR) shield layer. Alternatively, the front filter 50 may be formed of only glass or transparent plastic for transmitting light emitted from the display panel 20 and protecting the display panel 20.

As shown in Fig. 1, the display panel 20 and the front filter 50 may be spaced a predetermined distance from each other. For example, an air gap may be formed between the display panel 20 and the front filter 50.

The display apparatus of the current embodiment may include a gasket 13 and a filter support 14 to support the front filter 50 and connect the front filter 50 to the back cover 12. In addition, the display apparatus may further include a module supporter 15 to support a display module formed by coupling the printed circuit board 30 and the display panel 20.

Fig. 2 is a partial sectional view illustrating the display panel 20 and the front filter 50 of the display apparatus. The display panel 20 and the front filter 50 may be disposed with a predetermined distance (d) therebetween.

Referring to Fig. 2, light emitted from the display panel 20 reaches a user side through the front filter 50 so that a user can see images displayed on the display panel 20.

At this time, a portion of light emitted from the display panel 20 is reflected from the front filter 50 to the display panel 20 where the portion of the light is re-reflected. The re-reflected portion reaches the user side through the front filter 50.

Due to such reflection of light between the display panel 20 and the front filter 50, a display image may be seen by a user as a double image (image doubling phenomenon).

If a watching angle of a user is $\theta$, a double image distance (D) may be calculated by Formula 1.

[Formula 1]

$$D = 2d \cdot \tan\theta$$

As the distance (d) between the display panel 20 and the front filter 50 increases, the double image distance (D) increases, and thus a user may see a more serious double image. On the other hand, if the distance (d) between the display panel 20 and the front filter 50 decreases, the double image distance (D) decreases.

Table 1 shows results of an experiment carried out to measure user's perception of image doubling phenomenon with reference to the double image distance (D). While decreasing the double image distance (D) from 10 mm to 0.5 mm, it was counted how many subjects perceive the image doubling phenomenon. Table 1 shows the percentage of subjects who perceived the image doubling phenomenon with respect to the double image distance (D).

Since subjects might easily perceive the image doubling phenomenon as they got closer to the display apparatus, the distance between the subjects and the display apparatus was fixed. Users usually watch broadcasting programs at positions spaced apart from display apparatuses by 1 m or more. Therefore, the distance between the subjects and the display apparatus was set to about 1 m.

[Table 1]

| Double image distance (D) | Perception percentage |
| --- | --- |
| 10 mm | 100% |
| 9.5 mm | 100% |
| 9 mm | 99% |
| 8.5 mm | 99% |
| 8 mm | 88% |
| 7.5 mm | 85% |
| 7 mm | 74% |
| 6.5 mm | 49% |
| 6 mm | 4% |
| 5.5 mm | 1% |
| 5 mm | 0% |
| 4.5 mm | 0% |
| 4 mm | 0% |

Referring to Table 1, most of the subjects perceived the image doubling phenomenon when the double image distance (D) was from 10 mm to 8.5 mm, and the number of subjects perceived the image doubling phenomenon was reduced as the double image distance (D) was reduced from 8.5 mm. When the double image distance (D) was 6.5 mm or smaller, more than 50% of the subjects did not perceive the image doubling phenomenon.

Particularly, referring to Table 1 and Fig. 3 showing a graph plotted using the data of Table 1, when the double image distance (D) was reduced to 6 mm, the percentage of subjects perceived the image doubling phenomenon was steeply reduced to 4%.

That is, if the double image distance (D) is 6 mm or smaller, most of users may not perceive the image doubling phenomenon. In other words, if the double image distance (D) is 6 mm or smaller, image quality that users feel may be improved.

In addition, since users may watch a broadcasting program through the display panel 20 in a state where they sit or stand at positions spaced apart from the display apparatus by 1 m or more, the angle between the direction of user's eyes and the display panel 20 may not be greater than 45 degrees. That is, generally, a seeing angle $\theta$ is not greater than 45 degrees. Thus, in Formula 1, the minimum value of $\tan\theta$ may be 0, and the maximum value of $\tan\theta$ may be 1.

If the range of $\tan\theta$ ($0 \leq \tan\theta \leq 1$) calculated based on the range of the seeing angle $\theta$ is input to Formula 1, the double image distance (D) ranges as follows.

[Formula 2]

$$0 \leq D \leq 2d$$

Referring to Formula 2, if the distance (d) between the display panel 20 and the front filter 50 is adjusted to 3 mm or smaller, the double image distance (D) can be 6 mm or smaller to make a user perceive no image doubling phenomenon as described with reference to Table 1.

That is, it may be necessary to keep the distance (d) between the display panel 20 and the front filter 50 equal to or smaller than 3 mm so as to make a user watch a broadcasting program without perceiving image doubling phenomenon and image quality deterioration when the user watch the broadcasting in front of the display panel 20.

However, as shown in Fig. 1, the distance (d) between the display panel 20 and the front filter 50 may be required to greater than the thickness of the filter support 14 when the filter support 14 is disposed between the display panel 20 and the front filter 50 and is grounded to the rear surface of the front filter 50.

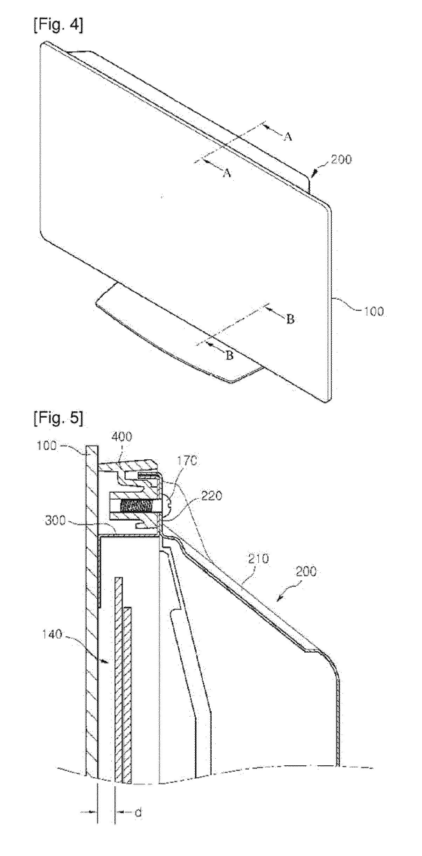

Fig. 4 is a perspective view illustrating a display apparatus according to another embodiment. In the following description of the display apparatus of Fig. 4, the same elements as those shown in Figs. 1 to 3 will not be described again.

Referring to Fig. 4, in the current embodiment, a display module is not protected by an additional front cabinet. Instead, a front filter 100 forms the entire front side of the display apparatus.

In the case, the horizontal and vertical lengths of the front filter 100 may be equal to or greater than the horizontal and vertical lengths of a back cover 200.

Fig. 5 is a partial sectional view illustrating the display apparatus of Fig. 4, according to a first embodiment. The structure of the display apparatus of the first embodiment will now be described in detail with reference to Fig. 5.

As shown in Fig. 5, the back cover 200 encloses the rear side of a display module 140 including a display panel in which a front plate and a rear plate are coupled to each other. The display module 40 may be coupled to a frame 400 fixed to the rear side of the front filter 10.

The frame 400 may be fixed to the rear side of the front filter 100 by using an adhesive member (not shown) or an adhesive. A double-sided adhesive tape may be used as the adhesive member. After the frame 400 is fixed to the rear side of the front filter 100, the frame 400 is located inward from the outer edge of the front filter 100 by a predetermined length so that the frame 400 may not seen when viewed from the front of the display apparatus.

The back cover 200 may include a body part 210 and an extension 220. The body part 210 forms the exterior of the back cover 200, and the extension 220 extends from the body part 210 and is grounded to a supporter 300. The back cover 200 may be coupled to the frame 400 using coupling members 170. For this, coupling holes may be formed in the extension 220 for the coupling members 170. As described above, an end of the supporter 300 is fixed to and grounded to the rear side of the front filter 100, and the other end of the supporter 300 is grounded to the extension 220 of the back cover 200. Therefore, the rear side of the front filter 100 can be electrically connected to the back cover 200 through the supporter 300. In detail, a ground part of an EMI shield layer disposed on the rear side of the front filter 100 can be electrically connected to the back cover 200 through the supporter 300.

According to the embodiments shown in Figs. 4 and 5, since the front filter 100 formed of a glass material forms the entire front side of the display apparatus, the front side of the display apparatus can be aesthetically improved and may look bigger.

In the embodiment shown in Fig. 4, it may be necessary to keep the distance (d) between the front filter 100 and the display panel included in the display module 140 equal to or smaller than 3 mm, so as to prevent the image doubling phenomenon and resulting image quality deterioration as described above. In this case, however, it may not be easy to dispose the supporter 300 between the display panel and the front filter 100.

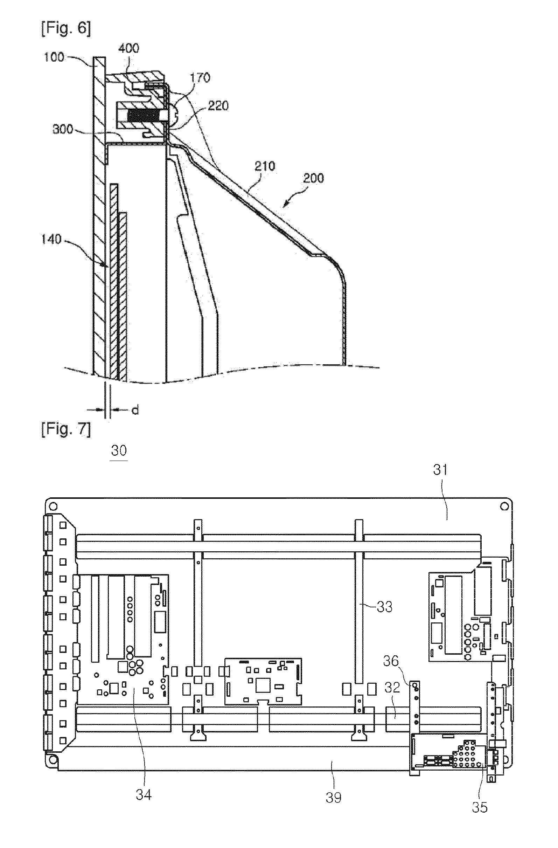

Therefore, as shown in Fig. 6, the supporter 300 may not be disposed between the front filter 100 and the display panel of the display module 140. Instead, the supporter 300 may be fixed to the rear side of the front filter 100 at an outer region of the display panel.

Fig. 7 is a rear view illustrating a display module according to an embodiment. A printed circuit board 30 may be disposed at a rear side 31 of the display module. The printed circuit board 30 includes circuits for operating a display panel 20.

Referring to Fig. 7, horizontal and vertical frames 32 and 33 and a module driving unit 34 may be disposed on the rear side 31 of the display module. The vertical frames 32 and 33 support the display module in horizontal and vertical directions. The module driving unit 34 sends driving signals to the display panel 20.

In addition, an input/out board 35 may be disposed on the rear side 31 of the display module 30. The input/output board 35 includes input terminals to receive audio and video signals from external devices, and output terminals to output audio and video signals to external devices. The input/output board 35 may be fixed to the rear side 31 of the display module 30 using a connection member 36.

The module driving unit 34 may include a plurality of driver integrated circuits (ICs) for supplying driving signals to electrodes of the display panel 20.

A heat sink 39 may be disposed at a position close to the driver ICs for dissipating heat from the driver ICs. For example, the heat sink 39 may be fixed to a lower side of the display module for dissipating heat from a data driver IC (not shown) used to supply data signals to the display panel 20.

As shown in Fig. 7, the heat sink 39 may be disposed on the lower side of the display module around a data driver IC (not shown) to dissipate heat from the data driver IC packed in a tape carrier package (TCP) for preventing the data driver IC from being damaged by overheat.

The heat sink 39 may be formed of an aluminum material because aluminum has high thermal conductivity and can be easily shaped through an extrusion process.

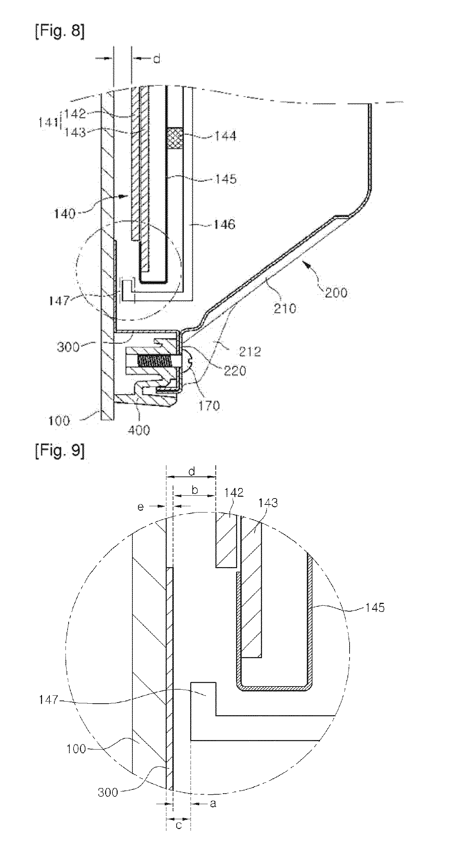

Fig. 8 is a sectional view illustrating the display apparatus of Fig. 4, according to a third embodiment. In detail, Fig. 8 is a sectional view taken along line B-B of Fig. 4 to show a lower structure of the display apparatus. In the following description, the same elements as those described with reference to Figs. 1 to 7 will not be described again.

Referring to Fig. 8, a driver IC 144 is disposed on a TCP film 145 connected to a display panel 141 for supplying driving signals to electrodes of the display panel 141 through the TCP film 145.

In an embodiment, a rear plate 143 of the display panel 141 may be electrically connected to a data driver board (not shown) through the TCP film 145 and the driver IC 144 so that data signals can be supplied to address electrodes of the rear plate 143 of the display panel 141.

A heat dissipation plate (not shown) may be attached to the rear side of the rear plate 143 of the display panel 141, and a TCP support frame (not shown) may be disposed on the rear side of the rear plate 143 of the display panel 141 for supporting the TCP film 145. In this case, the driver IC 144 may be disposed at the TCP support frame (not shown).

A heat sink 146 may surround at least portions of the driver IC 144 and the TCP film 145 for dissipating heat from the driver IC 144 to surrounding air. The heat sink 146 may be attached to the driver IC 144 using a thermal tape (not shown).

As shown in Fig. 8, the heat sink 146 of the display apparatus of the embodiment may extend close to the front filter 100, and a front end 147 of the heat sink 146 close to the front filter 100 may be bent in a direction parallel with the front filter 100. For example, the front end part 147 of the heat sink 146 may be bent toward the display panel 141 in a direction parallel with the front filter 100 for efficient use of the inside space of the display apparatus. For example, if the front filter 100 of the display apparatus is impacted, the display panel 141 may be damaged, or the distance (d) between the front filter 100 and the display panel 141 may be changed to vary the optical characteristics of the display apparatus and deteriorate the image quality of the display apparatus.

In addition, if the distance (d) between the display panel 141 and the front filter 100 is decreased to, for example, 3 mm or smaller, an external impact may be directly transmitted to the display panel 141. In this case, the display panel 141 may be largely damaged or image quality may be largely decreased.

Therefore, as shown in Fig. 8, the front end part147 of the heat sink 146 is disposed close to the front filter 100 to protect the display panel 141 from an external impact or prevent variation of the distance (d) between the front filter 100 and the display panel 141.

In addition, since the front end part 147 of the heat sink 146 is bent, deflection of the heat sink 146 can be prevented, and thus the stiffness of the display module 140 can be increased for resisting against external impacts.

Fig. 9 is an enlarged sectional view illustrating a portion indicated by a dot-and-chain line in Fig. 8, according to an embodiment.

Referring to Fig. 9, a distance (c) between the front end part 147 of the heat sink 146 and the front filter 100 may be smaller than the distance (d) between the display panel 141 and the front filter 100. Therefore, although the front filter 100 or the display module including the display panel 141 is impacted, the front filter 100 and the display panel 141 may not collide with each other. Thus, the front filter 100 or the display panel 141 can be protected, and the distance (d) between the display panel 141 and the front filter 100 can be kept constant.

When the distance (d) between the display panel 141 and the front filter 100 is adjusted to 3 mm or smaller for making a user perceive no image doubling phenomenon, the distance (c) between the front end part 147 of the heat sink 146 and the front filter 100 may be adjusted to 1.5 mm or smaller for protecting the display panel 141 or other parts and keep the distance (d) constant.

In addition, if the heat sink 146 is close to the front filter 100 as described above, a distance (a) between the front end part 147 of the heat sink 146 and the supporter 300 is very small, and thus heat can be dissipated through the heat sink 146 more effectively.

Thus, the distance (a) between the front end part 147 of the heat sink 146 and the supporter 300 may be smaller than a distance (b) between the display panel 141 and the support part 300. When the thickness (e) of the support part 300 is considered, the distance (a) may be adjusted to 0.9 mm or smaller so as to prevent damage of the display panel 141, keep the distance (d) constant, and facilitate heat dissipation.

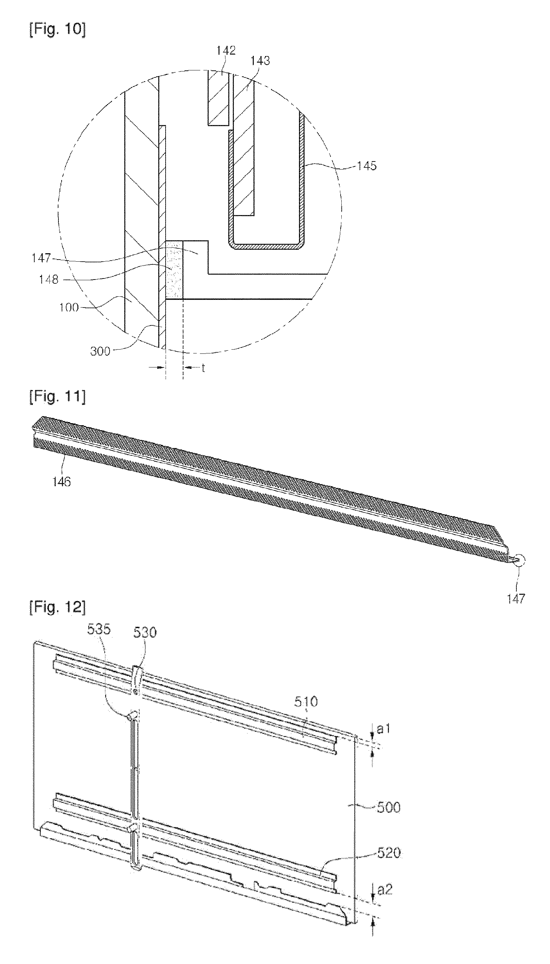

Referring to Fig. 10, an adhesive layer 148 is disposed between the front end part 147 of the heat sink 146 and the support part 300 for fixing the heat sink 146 to the support part 300. In this case, the display panel 141 may be protected more surely, and the distance (d) can be kept constant more surely.

In addition, if the adhesive layer 148 is formed of an elastic material capable of absorbing shock, the display panel 141 or the front filter 100 may be less damaged because the adhesive layer 148 absorbs an impact.

For example, the adhesive layer 148 disposed between the front end part 147 of the heat sink 146 and the support part 300 is a thermally conductive tape. In this case, the heat dissipating effect of the heat sink 146 may largely be improved, and the display apparatus may be less impacted owing the adhesive layer 148.

Alternatively, the front end part 147 of the heat sink 146 may make contact with the support part 300 for protecting the display panel 141 or the front filter 100 and facilitating heat dissipation as described above.

Fig. 11 is a perspective view illustrating the heat sink 146 according to an embodiment. Referring to Fig. 11, the heat sink 146 may have a U-shaped. That is, the front end part 147 of the heat sink 146 may be bent toward the display panel 141 as described with reference to Figs. 8 to 10, and a rear end of the heat sink 146 may be coupled to the rear side of the display module after being bent one or more times in parallel with the front end part 147.

Fig. 12 is a perspective view illustrating horizontal and vertical frames disposed at the rear side of the display module according to an embodiment.

Referring to Fig. 12, a main frame 500 is provided for coupling with the rear side of a display panel. The main frame 500 includes one or more horizontal frames 510 and 520 and a vertical frame 530.

The horizontal frames 510 and 520 extend horizontally on the main frame 500 for improving the rigidity of the display module by horizontally supporting the display module. The vertical frame 530 extends vertically on the main frame 500 for improving the rigidity of the display module by vertically supporting the display module. As shown in Fig. 12, two vertically frames 510 and 520 may be disposed at upper and lower positions of the main frame 500, and a vertical frame 530 may be disposed at one of left and right positions of the main frame 500. In addition, the vertical frame 530 may be fixed to the main frame 500 using at least one coupling members 535.

In the case of the display apparatus of the embodiment, the horizontal frame 530 disposed at the upper position of the main frame 500 may be close to the upper end of the main frame 500 so as to prevent the display module from deflecting downward from the horizontal frame 530. In this case, the rigidity of the display module can be improved.

For example, in the case where the distance between the display module and the front filter is adjusted to 3 mm or smaller so as to make a user perceive no image doubling phenomenon as described above, the display module may easily broken by an impact. That is, if the display module is bent by an impact, since the distance between the display module and the front filter is small, the front filter or the display panel may be broken by collision.

Therefore, as shown in Fig. 12, the rigidity of the display module can be increased by adjusting a distance (al) between the horizontal frame 510 and the upper end of the main frame 500 to be smaller than a distance (a2) between the horizontal frame 520 and the lower end of the main frame 500, so as to protect the display module from impacts even when the distance between the display module and the front filter is 3 mm or smaller.

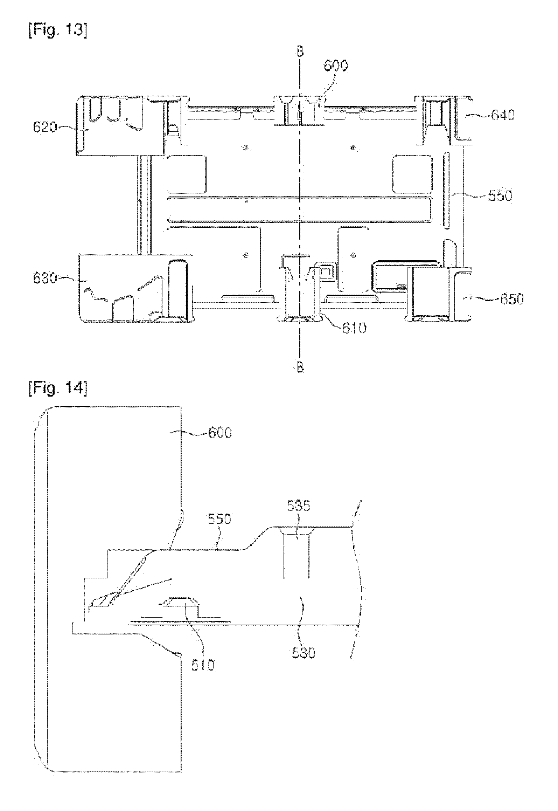

Fig. 13 is a view illustrating packing members for a display apparatus according to an embodiment. As shown in Fig. 13, a plurality of packing members 600, 610, 620, 630, 640, and 650 may be used, which accommodate portions of a display apparatus, respectively.

Referring to Fig. 13, a display apparatus package may include: an upper packing member 600 to accommodate an upper center part of the display apparatus including a back cover 550; a lower packing member 610 to accommodate a lower center part of the display apparatus; two left packing members 620 and 630 to accommodate left corners of the display apparatus, respectively; and two right packing members 640 and 650 to accommodate right corners of the display apparatus, respectively.

Each of the packing members 600, 610, 620, 630, 640, and 650 includes an insertion recess to receive a part of the display apparatus and is formed of an elastic material capable of absorbing shock. For example, the packing members 600, 610, 620, 630, 640, and 650 may be formed of an elastic material such as Styrofoam or rubber for absorbing shocks so that the display apparatus can be less impacted.

Fig. 14 is a sectional view taken along line B-B of Fig. 13 for illustrating the display apparatus and the packing members according to an embodiment.

Referring to Fig. 14, as described above, since the (upper) horizontal frame 510 is disposed close to the upper end of the main frame 500. Therefore, when the upper center part of the display apparatus is accommodated in the upper packing member 500, at least a portion of the horizontal frame 510 is overlapped with the upper packing member 500.

As described above, since the upper horizontal frame 510 is close to the upper end of the main frame 500 so that the horizontal frame 510 can be overlapped with the upper packing member 500, when the display apparatus is accommodated in the packing members 600, 610, 620, 630, 640, and 650, at least a portion of the horizontal frame 510 can be inserted in the insertion recess of the upper packing member 500.

Therefore, when the display apparatus is carried or processed in a state where the display apparatus is accommodated in the packing members 600, 610, 620, 630, 640, and 650, a display module of the display apparatus can be stably supported and impacts can be absorbed although the display apparatus is impacted. Thus, the rigidity of the display apparatus can be improved.

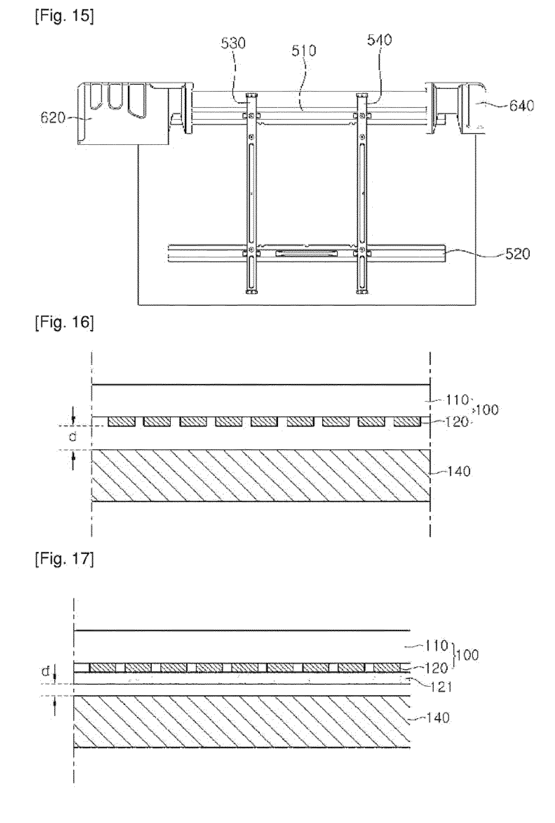

Referring to Fig. 15, the horizontal frame 510 may extend to regions of the packing members 620 and 640 that accommodate upper left and right parts of the display apparatus. Therefore, when the display apparatus is accommodated in the packing members 600, 610, 620, 630, 640, and 650, both ends of the horizontal frame 510 can be inserted in the insertion recesses of the packing members 620 and 640.

Therefore, when the display apparatus is carried or processed in a state where the display apparatus is accommodated in the packing members 600, 610, 620, 630, 640, and 650, the display module of the display apparatus can be stably supported and impacts can be absorbed although the display apparatus is impacted.

In addition, as shown in Fig. 15, vertical frames 530 and 540 may be vertically disposed at left and right positions of the main frame 500, respectively.

Figs. 16 and 17 are schematic sectional views illustrating front filter structures including an EMI shield layer according to embodiments. A front filter 100 includes a glass 110 and an EMI shield layer 120 disposed on a rear surface of the front filter 100.

Referring to Fig. 16, the EMI shield layer 120 may be a mesh EMI shield layer formed by patterning a metal layer in a mesh shape to shield electromagnetic waves.

As described above, if the distance (d) between the front filter 100 and a display panel of a display module 140 is very small at about 3 mm or smaller, the EMI shield layer 120 may be brought into contact with the display module 140 (in detail, the display panel of the display module 140) due to an impact applied to the display apparatus, and thus mesh patterns of the EMI shield layer 120 may be worn down.

In this case, the image quality and EMI shielding of the display apparatus can be deteriorated due to particles generated by abrasion of the mesh patterns of the EMI shield layer 120.

Therefore, as shown in Fig. 17, a protective layer 121 is disposed between the display module 140 and the EMI shield layer 120 of the front filter 100 to prevent abrasion of the mesh patterns of the EMI shield layer 120.

The protective layer 121 may be formed of polyethylene terephthalate (PET). An adhesive layer (not shown) may be disposed on the EMI shield layer 120 so that the protective layer 121 can be bonded to the EMI shield layer 120.

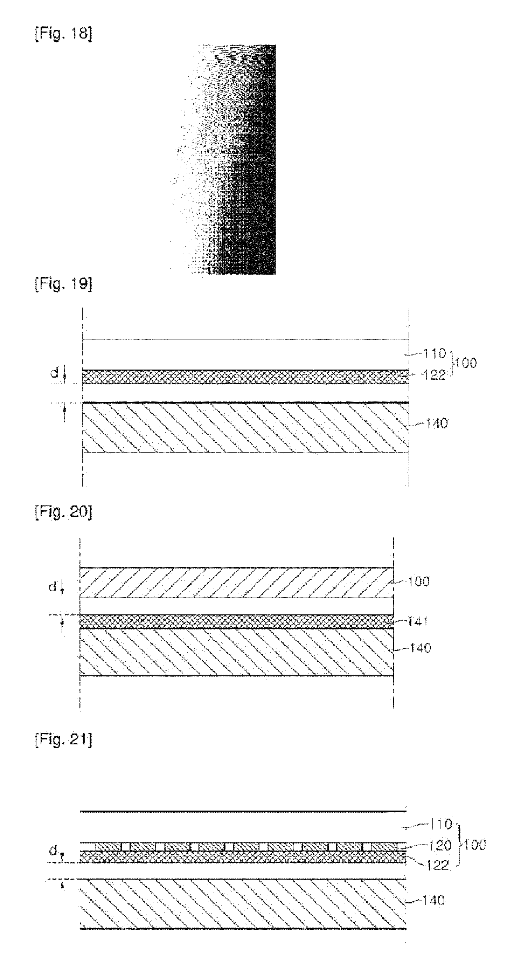

As the distance (d) between the front filter 100 and the display panel of the display module 140 is reduced, light reflected from the display module 140 may interfere with light reflected from the front filter 100. Such interference includes destructive interference and constructive interference. If destructive interference occurs, light phases cancel each other and thus it looks dark, and if constructive interference occurs, light phases are added together and thus it looks bright. Due to the above-described light interference, circular rings known as Newton's ring may appear on a screen as shown in Fig. 18. The brightness uniformity of a display image may be deteriorated due to such Newton' rings, and thus the image quality may be decreased.

Table 2 below shows results of measurement carried out to check generation of the image doubling phenomenon according to the distance (d) between the front filter 100 and the display panel of the display module 140.

[Table 2]

| Distance (D) | Newton's rings |
|---|---|
| 3 mm | X |
| 2.8 mm | X |
| 2.6 mm | X |
| 2.4 mm | X |
| 2.2 mm | X |
| 2.0 mm | X |
| 1.8 mm | X |
| 1.6 mm | X |
| 1.4 mm | O |
| 1.2 mm | O |
| 1.0mm | O |
| 0.8 mm | O |

Referring to Table 2, if the distance (d) between the front filter 100 and the display panel of the display module 140 is very small at 1.4 mm or smaller, Newton's rings may occur by interference between reflected light rays.

Figs. 19 to 22 are schematic sectional views illustrating display apparatus structures including anti glare layers according to embodiments. Concave-convex structures may be formed on the anti glare layers to scatter or irregularly reflect incident light.

Referring to Fig. 19, an anti glare layer 122 scatters or irregularly reflect light coming from a front filter 100 so that interference between light reflected from the front filter 100 and light reflected from a display module 140 can be prevented.

Therefore, although the distance (d) between the front filter 100 and a display panel of the display module 140 is 1.4 mm or smaller, Newton's rings may not appear owing to the anti glare layer 122 disposed on the front filter 100 (in detail, a glass 100 of the front filter 100).

That is, according to the embodiment, image quality deterioration caused by the image doubling phenomenon can be prevented by adjusting the distance (d) between the front filter 100 and the display panel of the display module 140 to 3 mm or smaller, and although the distance (d) is 1.4 mm or smaller, Newton's ring may not appear owing to the anti glare layer 122.

Referring to Fig. 20, an anti glare layer 141 may be disposed on the front side of a display module 140. In detail, the anti glare layer 141 may be disposed on a front plate of a display panel. In this case, the anti glare layer 141 scatters or irregularly reflects light incident on the display module 140 so that interference between light reflected from a front filter 100 and light reflected from the display module 140 can be reduced.

Referring to Fig. 21, an EMI shied layer 120 may be disposed on the rear side of a glass 110 of a front filter 100, and an anti glare layer 122 may be disposed on the rear side of the EMI shied layer 120.

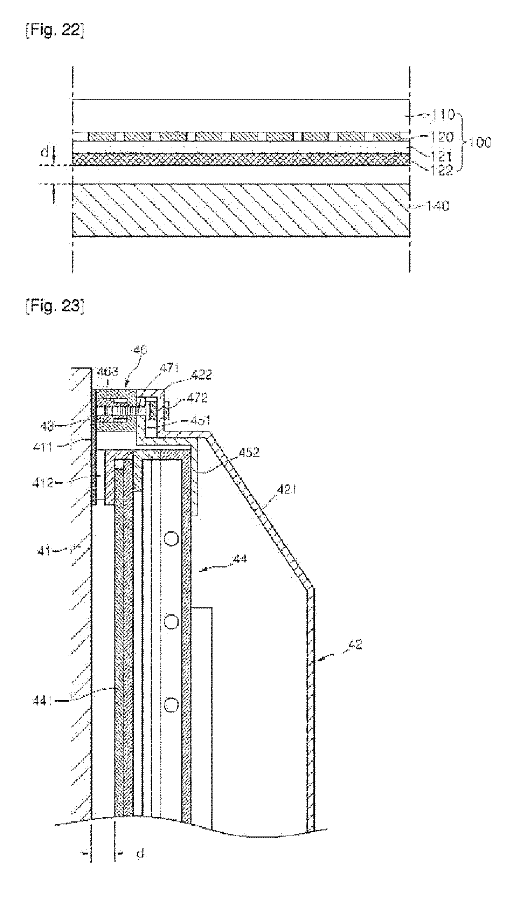

Referring to Fig. 22, an EMI shied layer 120, a protective layer 121 formed of a PET film, and an anti glare layer 122 may be stacked on the rear side of a glass 110 of a front filter 100.

Fig. 23 is a sectional view illustrating a display apparatus according to another embodiment.

Referring to Fig. 23, the display apparatus of the current embodiment may include a front filter 41, a back cover 42, and a frame 46 disposed between the front filter 41 and the back cover 42. The frame 46 forms a portion of the lateral side of the display apparatus.

A plurality of panel supporter 43 may be fixed to the front filter 41 and a shield part 411. A module receiving part 412 may be disposed on the shield part 411 to receive a portion of a display module 44.

A first fixing hole 431 may be formed in the panel supporter 43 for fixing the display module 44 and a connection member 45, and a second fixing hole 432 may be formed in the panel supporter 43 to fix the back cover 42.

The connection member 44 may include: a fixed part 451 fixed to the panel supporter 43; and a module supporter 452 bent from the cap plate 451 to support an edge of the display module 44.

The fixing part 451 may include: a first fixing hole 453 through which a coupling member 471 is inserted; a second fixing hole 454 through which a coupling member 427 is inserted to fix the back cover 42 to the panel supporter 43.

The frame 46 may include: first and second fixing holes 461 and 462 aligned with the first and second fixing holes 431 and 432 of the panel supporter 43; and an insertion hole 463 in which the panel supporter 43 is inserted.

An edge part 422 extending outward from a body part 421 of the back cover 42 is connected to the frame 46, and fixing holes 423 formed in the edge part 422 are aligned with the second fixing holes 432, 462, and 454. The coupling member 472 coupled to the second fixing hole 432 of the panel supporter 43 may be inserted through the fixing holes 432, 462, and 454.

In the case of the display apparatus shown in Fig. 23, the distance (d) between a panel 441 and the front filter 41 may be adjusted to 3 mm or smaller for preventing the image doubling phenomenon and resulting image quality deterioration as described with reference to Figs. 2 and 3.

In addition, if the distance (d) between the panel 441 and front filter 41 is 1.4 mm or smaller, an anti glare layer such as the anti glare layers 122 shown in Figs. 19 to 22 may be used to prevent generation of Newton's rings and resulting image quality deterioration.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

**1.** A display apparatus comprising:

a display panel; and
a front filter disposed at a front side of a display module,
wherein the display panel and the front filter are spaced apart from each other by 3 mm or less.

2. The display apparatus according to claim 1, further comprising:

an electromagnetic interference (EMI) shield layer disposed on a rear side of the front filter; and
a protective layer between the EMI shield layer and the display panel.

3. The display apparatus according to claim 2, wherein the protective layer comprises a polyethylene terephthalate (PET) film bonded to the EMI shield layer.

4. The display apparatus according to claim 1, further comprising:

a back cover at a rear side of the display module comprising the display panel; and
a supporter fixed to a rear side of the front filter so as to electrically connect the front filter and the back cover,
wherein the supporter is disposed outside the display panel so that the supporter is not located between the display panel and the front filter.

5. The display apparatus according to claim 1, wherein the display panel and the front filter are spaced apart from each other by 1.4 mm or less.

6. The display apparatus according to claim 5, wherein the front filter comprises an anti glare layer.

7. A display apparatus comprising:

a display module comprising a display panel, a driver integrated circuit (IC) configured to supply a driving signal to the display panel, and a heat sink configured to dissipate heat from the driver IC; and
a front filter at a front side of the display module,
wherein a distance between the display panel and the front filter is 3 mm or smaller, and
the a front end part of the heat sink close to a rear side of the front filter is bent in a direction parallel with the front filter.

8. The display apparatus according to claim 7, wherein a distance between the front end part of the heat sink and the front filter is smaller than the distance between the display panel and the front filter.

9. The display apparatus according to claim 7, wherein the distance between the front end part of the heat sink and the front filter is 1.5 mm or smaller.

10. The display apparatus according to claim 7, further comprising:

a back cover enclosing a rear side of the display module; and
a supporter fixed to the rear side of the front filter so as to electrically connect the front filter and the back cover,
wherein a distance between the front end part of the heat sink and the front filter is smaller than the distance between the display panel and the front filter.

11. The display apparatus according to claim 10, wherein a distance between the front end part of the heat sink and the supporter is 0.9 mm or smaller.

12. The display apparatus according to claim 10, further comprising an adhesive layer between the front end part of the heat sink and the supporter.

13. The display apparatus according to claim 12, wherein the adhesive layer comprises a thermally conductive tape.

14. The display apparatus according to claim 13, wherein the thermally conductive tap has a thickness of 1.5 mm or less.

15. The display apparatus according to claim 10, wherein the front end part of the heat sink makes contact with the supporter.

**16.** The display apparatus according to claim 7, wherein the distance between the display panel and the front filter is 1.4 mm or smaller, the front filter comprises an anti glare layer.

**17.** A display apparatus comprising:

a display panel;
a front filter at a front side of the display panel;
a main frame coupled to a rear side of the display panel; and
first and second horizontal frames extending horizontally at upper and lower positions of the main frame,
wherein a distance between the display panel and the front filter is 3 mm or smaller, and
a distance between the first horizontal frame and an upper end of the main frame is smaller than a distance between the second horizontal frame and a lower end of the main frame.

**18.** The display apparatus according to claim 17, further comprising a vertical frame extending vertically at a side of the main frame,
wherein the vertical frame is disposed at one of left and right sides of the main frame.

**19.** The display apparatus according to claim 17, wherein the distance between the display panel and the front filter is 1.4mm or smaller.

**20.** The display apparatus according to claim 19, further comprising an anti glare layer on a rear side of the front filter or the front side of the display panel.

[Fig. 1]

[Fig. 2]

[Fig. 3]

[Fig. 4]

[Fig. 5]

[Fig. 6]

[Fig. 7]

30

[Fig. 8]

[Fig. 9]

[Fig. 10]

[Fig. 11]

[Fig. 12]

[Fig. 13]

[Fig. 14]

[Fig. 15]

[Fig. 16]

[Fig. 17]

[Fig. 18]

[Fig. 19]

[Fig. 20]

[Fig. 21]

[Fig. 22]

[Fig. 23]

## INTERNATIONAL SEARCH REPORT

| | International application No. |
|---|---|
| | **PCT/KR2009/005380** |

**A. CLASSIFICATION OF SUBJECT MATTER**

*H04N 5/64(2006.01)i, H01J 17/49(2006.01)i, G02F 1/1333(2006.01)i, G09G 3/20(2006.01)i*

According to International Patent Classification (IPC) or to both national classification and IPC

**B. FIELDS SEARCHED**

Minimum documentation searched (classification system followed by classification symbols)
H04N 5/64; B32B 7/02; G02B 5/02; G02F 1/1335; H01J 17/16; H01J 17/49

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: display, panel, front panel, anti glare, overlapping, diffuse reflection

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | KR 10-2006-0080120 A (SAMSUNG CORNING CO., LTD.) 07 July 2006<br>See claims 1, 7, figure 2, page 4. | 1-3,5<br>6<br>4,7-20 |
| Y | JP 10-217380 A (MITSUI CHEM INC) 18 August 1998<br>See figure 2, pages 16-17 | 6 |
| A | KR 10-2008-0097855 A (LG ELECTRONICS INC.) 06 November 2008<br>See claim 5, figures 1-6. | 1-20 |
| A | KR 10-2009-0015349 A (LG ELECTRONICS INC.) 12 February 2009<br>See claims 18-19, figure 7 | 1-20 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 MARCH 2010 (26.03.2010) | **02 APRIL 2010 (02.04.2010)** |

| Name and mailing address of the ISA/KR | Authorized officer |
|---|---|
| Korean Intellectual Property Office<br>Government Complex-Daejeon, 139 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2009/005380**

| Patent document cited in search report | Publication date | Patent family member | Publication date |
|---|---|---|---|
| KR 10-2006-0080120 A | 07.07.2006 | NONE | |
| JP 10-217380 A | 18.08.1998 | EP 0810452 A2 | 03.12.1997 |
| | | EP 0810452 A3 | 26.08.1998 |
| | | EP 0810452 B1 | 24.10.2007 |
| | | EP 1901095 A1 | 19.03.2008 |
| | | JP 03-004222 B2 | 19.11.1999 |
| | | JP 03-004271 B2 | 19.11.1999 |
| | | JP 2000-031687 A | 28.01.2000 |
| | | JP 3004222 B2 | 31.01.2000 |
| | | KR 10-0215589 B1 | 16.08.1999 |
| | | TW 446637 A | 21.07.2001 |
| | | US 6104530 A1 | 15.08.2000 |
| KR 10-2008-0097855 A | 06.11.2008 | EP 1990825 A2 | 12.11.2008 |
| | | EP 1990825 A3 | 19.11.2008 |
| | | US 2008-0272681 A1 | 06.11.2008 |
| KR 10-2009-0015349 A | 12.02.2009 | NONE | |

Form PCT/ISA/210 (patent family annex) (July 2009)